# EUROPÄISCHE PATENTSCHRIFT

(11) **EP 2 771 953 B1**
(45) Veröffentlichungstag und Bekanntmachung des Hinweises auf die Patenterteilung: **21.10.2015**
(21) Anmeldenummer: 12783115.4
(22) Anmeldetag: 25.10.2012
(51) Int. Cl.: H02B 1/30

(54) **ECKVERSTÄRKUNGSEINSATZ**
CORNER REINFORCEMENT INSERT
INSERT DE RENFORT D'ANGLE

(30) Priorität: 27.10.2011 DE 102011117259
(43) Veröffentlichungstag der Anmeldung: 03.09.2014
(73) Patentinhaber: C E S Control Enclosure Systems GmbH, 61348 Bad Homburg v. d. Höhe (DE)
(72) Erfinder: JOCHAM, Simon, 80469 München (DE); MAZURA, Paul, 76307 Karlsbad (DE); NICOLAI, Walter, 35418 Buseck (DE); SCHAAF, Igor, Harry, 77836 Rheinmünster (DE)
(74) Vertreter: Beyer, Andreas
(86) Internationale Anmeldenummer: PCT/EP2012/004472
(87) Internationale Veröffentlichungsnummer: WO 2013/060462

(56) Entgegenhaltungen:
- EP-A1- 0 539 645
- GB-A- 252 541

## Beschreibung

Die Erfindung betrifft einen Eckverstärkungseinsatz. Ein Eckverstärkungseinsatz ist für Bauteile gedacht, die aus relativ dünnem, tafelförmigem Material bestehen und einen doppelt abgewinkelten Rand aufweisen, d.h. einen Rand, der dadurch entsteht, dass das tafelförmige Material zweimal um zumindest ungefähr 90 Grad in die gleiche Richtung abgewinkelt ist. Bauteile der genannten Art können beispielsweise Wandelemente aus Flachblech sein, die z.B. bei Industriemöbeln wie Regalen, Schränken, insbesondere auch Schaltschränken, aber auch als Verkleidungsteile Verwendung finden. Ein Wandelement kann auch eine Tür sein, z.B. eine Blechtür für einen Schrank oder ähnliches. Statt aus Blech können solche Wandelemente auch aus Kunststoff hergestellt sein.

Bauteile und insbesondere Wandelemente der beschriebenen Art erhalten ihre Stabilität, insbesondere ihre Torsionsstabilität, vor allem durch den doppelt abgewinkelten Rand, da das den Großteil ihrer Fläche einnehmende, dünne Blech- oder Kunststoffmaterial als solches keine gute Verwindungssteifigkeit hat. Zwar erhöht der doppelt abgewinkelte Rand die Verwindungssteifigkeit solcher Bauteile erheblich, jedoch besteht insbesondere bei größeren Bauteilen der Wunsch, die Verwindungssteifigkeit weiter zu erhöhen, ohne das Gewicht des Gesamtbauteils spürbar zu vergrößern.

Aus der EP 0 539 645 A1 ist ein Eckverbindungsteil für insbesondere Tür- und Fensterrahmen bekannt, welches dafür sorgt, dass die an einer Ecke aufeinandertreffenden Rahmenteile korrekt zueinander ausgerichtet sind. Das Eckverbindungsteil ist als ein plattenförmiger, zumindest im Wesentlichen in einer Ebene angeordneter Eckflansch ausgestaltet, der einen abknickenden inneren Umfangsrand und einen abknickenden äußeren Umfangsrand hat. Von dem plattenförmigen Eckflansch erstrecken sich von derselben Seite ein erster Steg und ein zweiter Steg normal zur Eckflanschebene und parallel zum inneren Umfangsrand. Der erste Steg befindet sich diesseits einer Abknickstelle des inneren Umfangsrands und der zweite Steg jenseits der Abknickstelle. Das Eckverbindungsteil hat einen T-förmigen Querschnitt.

Zur Lösung des oben genannten Problems stellt die vorliegende Erfindung einen Eckverstärkungseinsatz bereit, der die Merkmale des Patentanspruchs 1 aufweist. Ein solcher Eckverstärkungseinsatz ist zum Einschieben in den Hohlraum ge - dacht, der in einem Eckbereich eines Bauteils der genannten Art durch den doppelt abgewinkelten Rand gebildet ist. Ein erfindungsgemäßer Eckverstärkungseinsatz umfasst ein Basisteil und ein eckförmiges Ummantelungsteil. Der Begriff "eckförmig" ist dahingehend zu verstehen, dass die Grundform des Ummantelungsteils der Form des Eckbereichs entspricht, in den der Eckverstärkungseinsatz einsetzbar sein soll. Eine solche Ecke muss nicht notwendigerweise einen 90 Grad Winkel haben, sondern kann auch einen kleineren oder größeren Winkel einschließen. Das Basisteil, das auch als Kern des erfindungsgemäßen Eckverstärkungseinsatzes bezeichnet werden kann, hat einen plattenförmigen, zumindest im Wesentlichen in einer Ebene angeordneten Eckflansch mit einem abknickenden, inneren Umfangsrand und einem abknickenden, äußeren Umfangsrand. Am inneren Umfangsrand des Eckflansches ragen auf ein und derselben Seite des Basisteils ein erster Steg und ein zweiter Steg normal zur Eckflanschebene hervor. Die beiden Stege verlaufen parallel zum inneren Umfangsrand, wobei der erste Steg sich diesseits einer Abknickstelle des inneren Umfangsrands und der zweite Steg sich jenseits der Abknickstelle befindet. Das Ummantelungsteil hat einen zur Aufnahme des plattenförmigen Eckflansches ausgestalteten Schlitz. Wenn der Eckflansch im Ummantelungsteil angeordnet ist, umgibt das Ummantelungsteil den plattenförmigen Eckflansch im Wesentlichen vollständig, wobei der erste Steg und der zweite Steg einen Anschlag für das Ummantelungsteil bilden. Während das Basisteil aus einem im Verhältnis zum Ummantelungsteil starren Material besteht, um dem Eckverstärkungseinsatz Stabilität zu verleihen, ist das Ummantelungsteil aus einem elastisch nachgiebigen Material hergestellt, beispielsweise aus einem Elastomermaterial, welches auch für Dichtungen Verwendung findet.

Ein solcher Eckverstärkungseinsatz, der mit nur geringem und vorzugsweise gar keinem Spiel in einen Eckbereich eines doppelt abgewinkelten Randes geschoben wird, erhöht durch die auf beiden Seiten des Ummantelungsteils vorhandene, flächige Auflagemöglichkeit für die entsprechenden Abschnitte des den doppelt abgewinkelten Rand aufweisenden Bauteils nicht nur die Verwindungssteifigkeit des Bauteils deutlich, sondern kann darüber hinaus den Eckbereich wirksam gegen ein Eindringen von Feuchtigkeit oder anderen unerwünschten Umwelteinflüssen abdichten. Insbesondere bei Wandelementen, die aus Flachblech gefertigt sind, ergeben sich in Eckbereichen Schlitze, die herkömmlich nur durch Schweißen, Verkleben oder durch Aufbringen einer Raupe aus Dichtmaterial zuverlässig verschlossen werden konnten. Mit dem erfindungsgemäßen Eckverstärkungseinsatz ist dies nun auf einfachere Weise möglich, wobei der Eckverstärkungseinsatz vorzugsweise ein geringes Übermaß aufweist, damit sich im eingesetzten Zustand eine leichte Presspassung ergibt, die die Dichtwirkung verbessert.

Vorzugsweise ragen die beiden Stege so weit von dem Eckflansch hervor, dass sie nicht nur einen Anschlag für das Ummantelungsteil bilden, sondern über das Ummantelungsteil hinaus ragen, um als mechanischer Anschlag des Eckverstärkungseinsatzes dienen zu können, der mit der freien Kante des doppelt abgewinkelten Randes des Bauteils zusammenwirken kann. Ein solchermaßen ausgestalteter Eckverstärkungseinsatz wird dann einfach in den Eckbereich eines Bauteils eingeschoben, bis die beiden Stege an der freien Kante des doppelt abgewinkelten Randes anliegen. Die beiden Stege können voneinander getrennt sein, vorzugsweise sind sie jedoch an der Abknickstelle des inneren Umfangsrands miteinander verbunden und bilden dann insgesamt einen abknickenden Steg. Gemäß einer bevorzugten Ausführungsform erstreckt sich von den so miteinander verbundenen Stegen an der Abknickstelle ein Positioniervorsprung in einer Richtung normal zur Eckflanschebene. Der Positioniervorsprung ragt noch weiter hervor als die beiden Stege und dient unter anderem dazu, das Einsetzen von mit erfindungsgemäßen Eckverstärkungseinsätzen versehenen Bauteilen in ihre Einbauposition zu erleichtern. Des Weiteren kann ein solcher Positioniervorsprung als Abstandshalter wirken, wenn mehrere gleichartige Bauteile aufeinander gestapelt sind, um beispielsweise beim Transport der Bauteile ein Reiben der Bauteile aneinander zu verhindern, das ansonsten zu einer Beschädigung des Oberfilächenfinish führen könnte. Die Wirkung als Abstandshalter kann auch beim Lackieren aufeinander gestapelter Bauteile von Vorteil sein.

Besonders bevorzugt ist der vorgenannte Positioniervorsprung im Bereich seines freien Endes abgeschrägt. Auf diese Weise hat der Positioniervorsprung zusätzlich eine selbstzentrierende Wirkung, was beispielsweise bei einem als Tür ausgebildeten Wandelement vorteilhaft ist, da es einer leicht hängenden Tür ermöglicht, beim Schließen wieder ihre korrekte Position einzunehmen. Der abgeschrägte Positioniervorsprung wirkt dabei wie eine Rampe, die die Tür beim Schließen in die gewünschte Position führt.

Bei bevorzugten Ausgestaltungen des erfindungsgemäßen Eckverstärkungseinsatzes ist jeder Steg mit zumindest einer sich normal zur Eckflanschebene erstreckenden Durchgangsbohrung versehen, deren Position mit einem vorgegebenen Rastermaß übereinstimmt. Häufig ist bei einem Bauteil, das einen doppelt abgewinkelten Rand aufweist, nahe der freien Kante des doppelt abgewinkelten Rands, d.h. auf der Innenseite des Bauteils, eine Lochreihe mit einem vorgegebenen Rastermaß vorhanden, die zur Befestigung von beispielsweise Einbauten dient. Eine solche Lochreihe kann insbesondere bei aus Blech gefertigten Bauteilen nicht ganz bis in eine Bauteilecke reichen, weil ein zur Erzeugung des doppelt abgewinkelten Randes verwendetes Biegewerkzeug nach dem Biegen wieder aus dem Eckbereich entfernt werden muss. Mittels der Durchgangsbohrungen in den beiden Stegen des Eckverstärkungseinsatzes lässt sich eine solche Lochreihe elegant ergänzen bzw. vervollständigen.

Zur weiteren Verbesserung der Dichtwirkung können auf äußeren Oberflächen des Ummantelungsteils eine oder auch mehrere Dichtrippen ausgebildet sein. Beispielsweise kann unmittelbar an der Spitze der Ecke eine Dichtrippe vom Ummantelungsteil hervorstehen, die sich beim Einschieben des Eckverstärkungseinsatzes in den Eckbereich in einen gegebenenfalls dort vorhandenen, kleinen Schlitz des doppelt abgewinkelten Rands presst. Weitere Dichtrippen können nahe einem solchen Schlitz ausgebildet sein, um einen weiter erhöhten Widerstand gegen das Eindringen unerwünschter Umwelteinflüsse zu bieten. Ebenso können Dichtrippen auf der Ober- und/oder Unterseite des Ummantelungsteils ausgebildet sein, um eine möglichst gute Abdichtung des Eckbereichs zu erzielen.

Bei manchen Ausführungsformen des erfindungsgemäßen Eckverstärkungseinsatzes befindet sich im Bereich des plattenförmigen Eckflansches eine Durchgangsöffnung, die normal zur Eckflanschebene durch das Basisteil und das Ummantelungsteil verläuft. Eine solche Durchgangsöffnung kann beispielsweise dazu dienen, Ösen oder Haken an einer Stützstruktur zu befestigen, an der die mit erfindungsgemäßen Eckverstärkungseinsätzen versehenen Bauteile angebracht sind. Wenn der Eckverstärkungseinsatz eine solche Durchgangsöffnung aufweist, dann ist auf den äußeren Oberflächen des Ummantelungsteils um die Durchgangsöffnung herum vorzugsweise wenigstens eine Dichtrippe ausgebildet, um zu verhindern, dass unerwünschte Umwelteinflüsse über die Durchgangsöffnung in das Bauteil eindringen können.

Zur einfachen und sicheren Montage ist bei bevorzugten Ausführungsformen des Eckverstärkungseinsatzes am Basisteil zumindest ein federzungenartiges Element ausgebildet, an dessen freiem Ende ein Rastnocken angeordnet ist, der sich durch das Ummantelungsteil erstreckt und aus ihm herausragt. Dieser Rastnocken ist zum Zusammenwirken mit einer Rastöffnung vorgesehen, die sich vorzugsweise auf der Innenseite des Bauteils in dem Eckbereich befindet, in den der Eckverstärkungseinsatz eingeschoben werden soll. Ist die gewünschte Montageposition erreicht, schnappt der Rastnocken in die Rastöffnung ein, was zum einen erkennbar werden lässt, dass die vorgesehene Einbauposition erreicht worden ist, und zum anderen den Eckverstärkungseinsatz gegen ein unbeabsichtigtes Lösen sichert. Vorzugsweise sind zwei federzungenartige Elemente mit jeweils einem Rastnocken vorhanden. Das federzungenartige Element und der Rastnocken können einstückig mit dem Basisteil ausgeführt sein.

Als Material für das Basisteil kommt grundsätzlich jedes Material in Frage, welches dazu in der Lage ist, dem gesamten Eckverstärkungseinsatz die gewünschte Stabilität zu geben. Das Basisteil kann beispielsweise aus einem Metall, einem Hartkunststoff oder auch einem Hartgummimaterial bestehen. Das Basisteil kann als ein Spritzgußteil ausgeführt sein.

Das Basisteil und das Ummantelungsteil können getrennt voneinander hergestellt und anschließend miteinander verbunden werden, um einen erfindungsgemäßen Eckverstärkungseinsatz zu bilden. Alternativ kann das Basisteil zusammen mit dem Ummantelungsteil durch einen Zweikomponentenformspritzvorgang als Einheit erzeugt werden Es versteht sich, dass dazu sowohl das Basisteil als auch das Ummantelungsteil aus einem spritzfähigen Material bestehen müssen. Gemäß einer weiteren Alternative kann das Ummantelungsteil auf das Basisteil aufvulkanisiert oder aufgespritzt sein.

Ein bevorzugtes Ausführungsbeispiel eines erfindungsgemäßen Eckverstärkungseinsatzes wird im Folgenden anhand der beigefügten, schematischen Figuren näher erläutert. Es zeigt:
- Figur 1: eine räumliche Ansicht eines erfindungsgemäßen Eckverstärkungseinsatzes von schräg oben, wobei ein Basisteil und ein Ummantelungsteil getrennt voneinander dargestellt sind,
- Figur 2: eine weitere räumliche Ansicht des Eckverstärkungseinsatzes aus Fig. 1,
- Figur 3: einen Eckverstärkungseinsatz gemäß Fig. 1 vor dem Einsetzen in ein Wandelement, das einen doppelt abgewinkelten Rand aufweist,
- Figur 4: eine Ansicht ähnlich Fig. 3, jedoch mit in einen Eckbereich des Bauteils mit doppelt abgewinkeltem Rand eingesetztem Eckverstärkungseinsatz,
- Figur 5: eine die Funktion eines Positioniervorsprungs verdeutlichende Ansicht eines Wandelements mit montiertem Eckverstärkungseinsatz, und
- Figur 6: eine Ansicht mehrerer übereinander gestapelter Wandelemente, die jeweils mit montierten Eckverstärkungseinsätzen versehen sind.

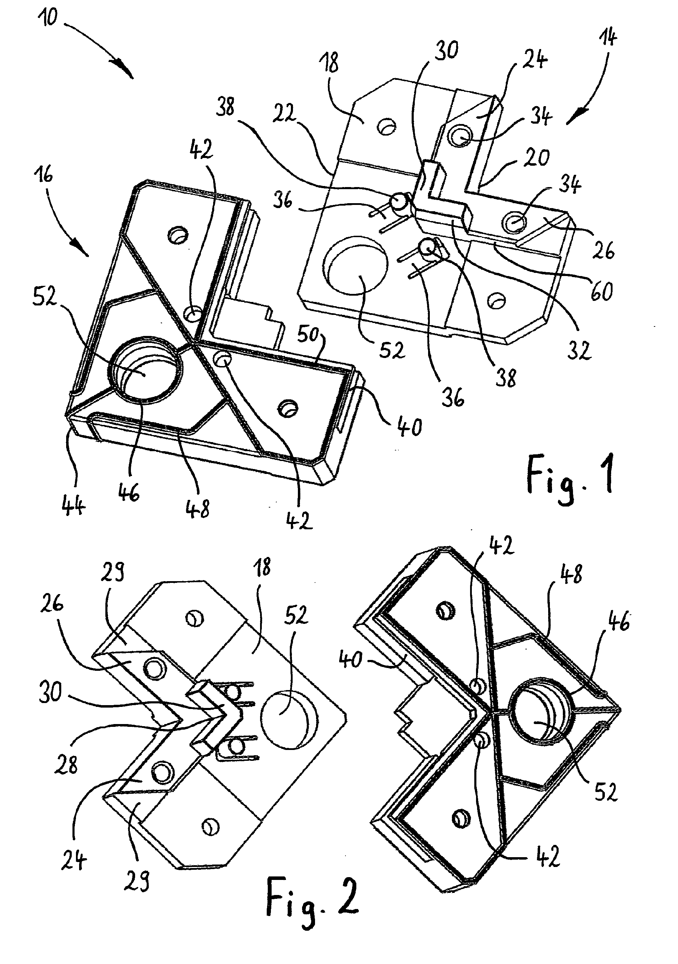

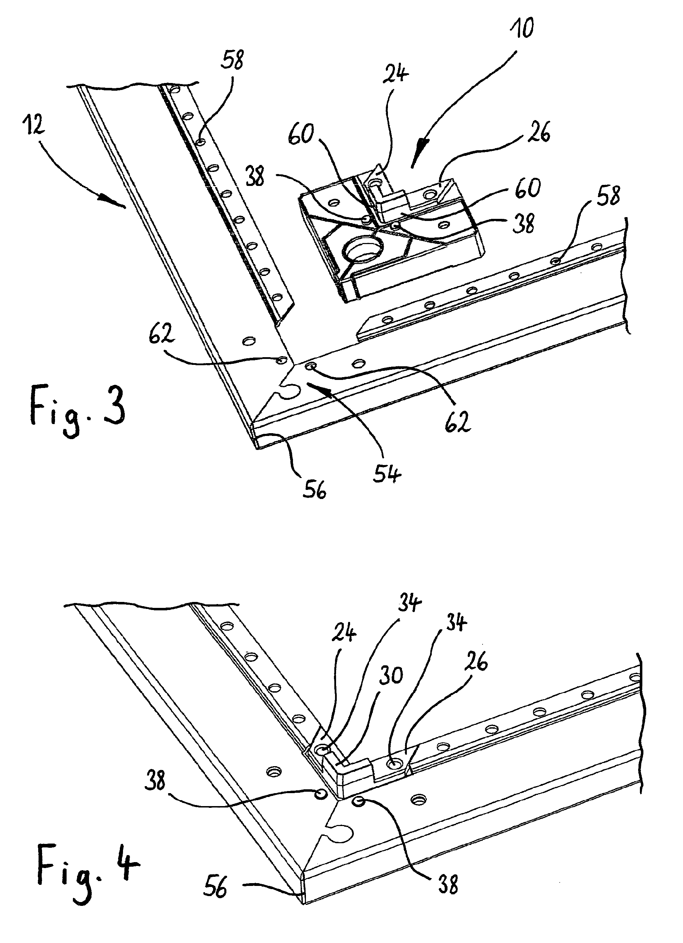

Fig. 1 und Fig. 2 zeigen in räumlicher Ansicht von schräg oben einen allgemein mit 10 bezeichneten Eckverstärkungseinsatz, der zum Einschieben in einen Eckbereich 54 eines Wandelements 12 (siehe Fig. 3) vorgesehen ist, das einen doppelt abgewinkelten Rand hat und beispielsweise aus Blech hergestellt ist. Der Eckverstärkungseinsatz 10 umfasst ein Basisteil 14 und ein Ummantelungsteil 16. Im gezeigten Ausführungsbeispiel ist die Grundform sowohl des Basisteils 14 als auch des Ummantelungsteils 16 angenähert L-förmig, weil der gezeigte Eckverstärkungseinsatz 10 zum Einsetzen in einen rechtwinkligen Eckbereich bestimmt ist. Ist der Eckbereich, in den der Eckverstärkungseinsatz eingesetzt werden soll, nicht rechtwinklig, wird die Grundform von Basisteil 14 und Ummantelungsteil 16 in der Regel der Form des Eckbereichs angepasst sein. Auch braucht das Basisteil 14 nicht notwendigerweise dieselbe Grundform zu haben wie das Ummantelungsteil 16.

Das Basisteil 14 hat einen plattenförmigen, zumindest im Wesentlichen in einer Ebene angeordneten Eckflansch 18 mit einem hier rechtwinklig abknickenden, inneren Umfangsrand 20 und einem hier ebenfalls rechtwinklig abknickenden, äußeren Umfangsrand 22. Am inneren Umfangsrand 20 ragen auf der Oberseite des Eckflansches 18 ein erster Steg 24 und ein zweiter Steg 26 normal zur Ebene des Eckfilansches 18 hervor, die beide parallel zum inneren Umfangsrand 20 verlaufen und an einer Abknickstelle 28 (siehe Fig. 2) miteinander verbunden sind bzw. dort ineinander übergehen. Somit befindet sich der erste Steg 24 auf der einen Seite der Abknickstelle 28, während der zweite Steg 26 auf der anderen Seite der Abknickstelle 28 angeordnet ist. Am von der Abknickstelle 28 entfernten, kurzen Rand weisen die Stege 24, 26 schräge Aussparungen 29 (siehe Fig. 2) auf, die ein Einschieben in den Eckbereich 54 erleichtern.

An der Abknickstelle 28 ragt von den beiden Stegen 24, 26 ein hier L-förmiger Positioniervorsprung 30 in dieselbe Richtung wie die Stege 24, 26 hervor, dessen Funktion später noch näher erläutert werden wird. Der Positioniervorsprung 30 ist im Bereich seines freien Endes wie bei 32 gezeigt abgeschrägt ausgebildet.

In jedem der Stege 24, 26 ist eine Durchgangsbohrung 34 ausgebildet, die normal zur Ebene des Eckflansches 18 verläuft und deren Bestimmung noch erläutert werden wird.

In dem plattenförmigen Eckflansch 18 sind durch geeignete Einschnitte bzw. Aussparungen zwei federzungenartige Elemente 36 gebildet, an deren freien Enden jeweils ein Rastnocken 38 angeordnet ist, der im gezeigten Ausführungsbeispiel einstückig mit den Elementen 36 und dem Eckflansch 18 ausgeführt ist. Im gezeigten Ausführungsbeispiel stehen beide Rastnocken 38 in dieselbe Richtung vor, in die auch die Stege 24, 26 und der Positioniervorsprung 30 vorstehen.

Das Basisteil 14 ist aus einem für den gewünschten Einsatzzweck geeigneten, relativ starren Material gefertigt, beispielsweise aus Metall, Hartkunststoff oder Hartgummi, und bildet einen Kern des Eckverstärkungseinsatzes 10, der Letzterem die gewünschte Stabilität gibt. Im einsatzfertigen Zustand wird der größte Teil des Basisteils 14 von dem Ummantelungsteil 16 umgeben, insbesondere der plattenförmige Eckflansch 18. Im gezeigten Ausführungsbeispiel bilden die Stege 24, 26 einen Anschlag für das Ummantelungsteil 16 und werden demzufolge vom Ummantelungsteil 16 nicht umgeben, sondern liegen frei.

Zur Aufnahme des Eckflansches 18 hat das Ummantelungsteil 16 einen entsprechend geformten, sich in das Ummantelungsteil 16 hinein erstreckenden Schlitz 40, in den der Eckflansch 18 vollständig hineinpasst. Ferner ist das Ummantelungsteil 16 an mit den Rastnocken 38 korrespondierenden Stellen mit zwei Öffnungen 42 versehen, durch die die Rastnocken 38 sich hindurch erstrecken und nach oben aus dem Ummantelungsteil 16 herausragen können.

Die äußere Gestalt des Ummantelungsteils 16 ist der Gestalt des hohlen Eckbereichs angepasst, in den der Eckverstärkungseinsatz 10 eingeschoben werden soll. Das Ummantelungsteil 16 besteht aus einem elastisch nachgiebigen Material, beispielsweise aus einem gummielastischen Material, und ist in seinen Abmessungen so gewählt, dass es mit wenig oder gar keinem Spiel in den Eckbereich passt. Das Ummantelungsteil 16 kann sogar ein gewisses Übermaß aufweisen, damit sich im in den Eckbereich eingesetzten Zustand eine Presspassung ergibt.

Auf den äußeren Oberflächen des Ummantelungsteils 16, die bei in einen Eckbereich 54 eingesetzten Eckverstärkungseinsatz 10 in Kontakt mit inneren Oberflächen des doppelt abgewinkelten Rands kommen, sind Dichtrippen 44, 46, 48 und 50 ausgebildet, die längs ihres Verlaufs einen erhöhten Anpressdruck und damit eine noch bessere Abdichtung bewirken. Die Dichtrippen 44, 46, 48 und 50 sind vorzugsweise so angeordnet, dass kritische Bereiche besonders gut abgedichtet werden, etwa die Spitze der Ecke, die Ränder des Ummantelungsteils 16 usw.

In der gezeigten Ausführungsform ist der Eckverstärkungseinsatz 10 im Bereich des plattenförmigen Eckflansches 18 mit einer Durchgangsöffnung 52 versehen, die sich normal zur Ebene des Eckflansches 18 durch das Basisteil 14 und das Ummantelungsteil 16 erstreckt. Diese Durchgangsöffnung 52 dient dazu, im Einbauzustand einen Zugang zu einer Tragstruktur zu bieten, an der das mit dem oder den Eckverstärkungseinsätzen 10 versehene Wandelement 12 angebracht werden soll. Beispielsweise kann durch die Öffnung 52 eine Kranöse (nicht gezeigt) an der Tragstruktur (nicht gezeigt) befestigt werden, um die Tragstruktur mittels eines Krans anzuheben. Um zu verhindern, dass aufgrund der Durchgangsöffnung 52 Feuchtigkeit oder andere unerwünschte Umgebungseinflüsse in das Wandelement 12 eindringen können, ist auf der Oberseite und der Unterseite des Ummantelungsteils 16 jeweils eine kreisförmige Dichtrippe 46 angeordnet, die die Durchgangsöffnung 52 vollständig umgibt.

In Fig. 3 ist der Eckverstärkungseinsatz 10 in einem Zustand gezeigt, in dem das Basisteil 14 mit dem Ummantelungsteil 16 verbunden ist. Ferner ist in Fig. 3 ein Wandelement 12 mit einem hier rechtwinkligen, zur Innenseite des Wandelements 12 offenen Eckbereich 54 gezeigt, der aufgrund des doppelt abgewinkelten Rands innen hohl ist und in den der Eckverstärkungseinsatz 10 eingeschoben werden soll. Gut zu sehen ist in Fig. 3 ferner ein Schlitz 56, der durch das Zuschneiden und Umkanten des Blechs entsteht, aus dem das Wandelement 12 und der doppelt abgewinkelte Rand bestehen. Schließlich sind in Fig. 3 zwei an der inneren, freien Kante des doppelt abgewinkelten Rands ausgebildete Lochreihen 58 zu erkennen, die ein vorgegebenes Lochraster aufweisen und dazu dienen, beispielsweise Einbauten an dem Wandelement 12 zu befestigen.

Die Fig. 4 zeigt den Eckverstärkungseinsatz 10 in seiner in den Eckbereich 54 vollständig eingeschobenen Stellung. Man erkennt, dass diese Einbaustellung definiert ist durch das in Anlage kommen von seitlichen Flächen 60 der Stege 24, 26 mit den inneren, freien Kanten des doppelt abgewinkelten Rands des Wandelements 12. In dieser Stellung schnappen die Rastnocken 38, die während des Einführvorgangs des Eckverstärkungseinsatzes 10 aufgrund ihrer Anordnung auf den federzungenartigen Elementen 36 etwas niedergedrückt werden, in Rastöffnungen 62 ein, die in den inneren Schenkeln des doppelt abgewinkelten Rands ausgebildet sind. Auf diese Weise ist der Eckverstärkungseinsatz 10 gegen ein unbeabsichtigtes Lösen gesichert.

In der in Fig. 4 wiedergegebenen Einbaustellung wird die Dichtrippe 44 in den Schlitz 56 an der Spitze der Ecke des Eckbereichs 54 gepresst und dichtet diesen Schlitz somit zuverlässig ab. Die inneren Schenkel des doppelt abgewinkelten Rands und die auf der entgegengesetzten Seite angeordnete, zu den inneren Schenkeln parallele Außenfläche des Wandelements 12 liegen auf der Oberseite bzw. der Unterseite des Ummantelungsteils 16 auf, wodurch sich zum einen die Verwindungssteifigkeit des gesamten Wandelements 12 erhöht und zum anderen ein Eindringen von Feuchtigkeit oder anderen widrigen Umgebungseinflüssen in den diesbezüglich kritischen Eckbereichen verhindert ist.

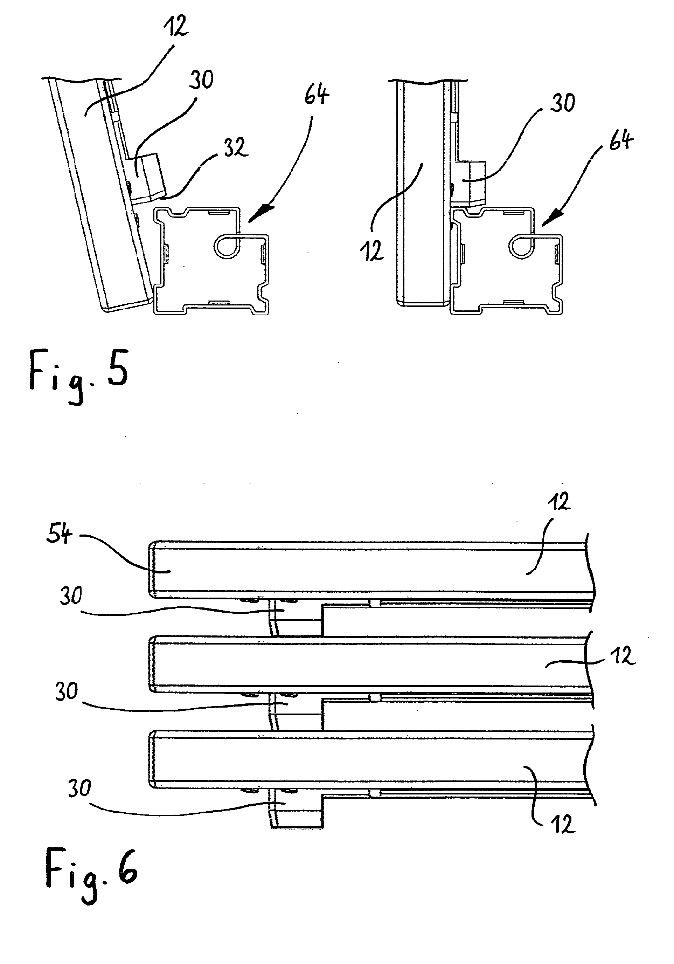

In Fig. 5 ist dargestellt, wie der Positioniervorsprung 30 ein Anbringen eines Wandelements 12 an einer nur rudimentär wiedergegebenen Stützstruktur 64 erleichtert. Ein unterer Teil des anzubringenden Wandelements 12 wird mittels des Positioniervorsprungs 30 im Bereich der Abschrägung 32 des Positioniervorsprungs auf die Stützstruktur 64 gesetzt und braucht dann nur noch zur Stützstruktur 64 hin geschoben zu werden. Die Abschrägung 32 wirkt als Rampe, mittels der das Wandelement 12 sich bei seiner Bewegung hin zur Stützstruktur 64 selbst an der Stützstruktur zentriert. Eine ähnliche Wirkung hat der Positioniervorsprung 30 mit seiner Abschrägung 32 dann, wenn das Wandelement 12 eine Tür ist, die beim Öffnen etwas absackt, d.h. etwas nach unten hängt.

In Fig. 6 ist dargestellt, wie die Positioniervorsprünge 30 als Abstandshalter dienen können, wenn mehrere Wandelemente 12 aufeinander gestapelt sind.

## Patentansprüche

1. Eckverstärkungseinsatz (10), insbesondere für Wandelemente mit doppelt abgewinkeltem Rand, mit:
- einem Basisteil (14), das
-- einen plattenförmigen, zumindest im Wesentlichen in einer Ebene angeordneten Eckflansch (18) mit einem abknickenden inneren Umfangsrand (20) und einem abknickenden äußeren Umfangsrand (22) und
-- einen ersten Steg (24) sowie einen zweiten Steg (26) aufweist, die sich von derselben Seite des Basisteils (14) normal zur Eckflanschebene und parallel zum inneren Umfangsrand (20) erstrecken, wobei der erste Steg (24) sich diesseits einer Abknickstelle (28) des inneren Umfangsrands (20) und der zweite Steg (26) sich jenseits der Abknickstelle (28) befindet,
**gekennzeichnet durch**
- ein eckförmiges Ummantelungsteil (16), das einen zur Aufnahme des Eckflansches (18) ausgestalteten Schlitz (40) umfasst, in dem der Eckflansch (18) vom Ummantelungsteil (16) im Wesentlichen vollständig umgeben angeordnet ist,
wobei
- der erste Steg (24) und der zweite Steg (26) sich am inneren Umfangsrand (20) des Eckflansches (18) erstrecken und einen Anschlag des Basisteils (14) für das Ummantelungsteil (16) bilden, und
- das Ummantelungsteil (16) aus einem Elastomermaterial und das Basisteil (14) aus einem im Verhältnis zum Ummantelungsteil (16) starren Material besteht.

2. Eckverstärkungseinsatz nach Anspruch 1,
**dadurch gekennzeichnet, dass** der erste Steg (24) und der zweite Steg (26) an der Abknickstelle (28) miteinander verbunden sind und dass sich von den Stegen (24, 26) an der Abknickstelle (28) ein Positioniervorsprung (30) normal zur Eckflanschebene erstreckt.

3. Eckverstärkungseinsatz nach Anspruch 2,
**dadurch gekennzeichnet, dass** der Positioniervorsprung (30) im Bereich seines freien Endes abgeschrägt ist.

4. Eckverstärkungseinsatz nach einem der Ansprüche 1 bis 3,
**dadurch gekennzeichnet, dass** jeder Steg (24, 26) mit zumindest einer sich normal zur Eckflanschebene erstreckenden Durchgangsbohrung (34) versehen ist, deren Position mit einem vorgegebenen Rastermaß übereinstimmt.

5. Eckverstärkungseinsatz nach einem der vorhergehenden Ansprüche,
**dadurch gekennzeichnet, dass** auf äußeren Oberflächen des Ummantelungsteils (16) eine oder mehrere Dichtrippen (44, 46, 48, 50) ausgebildet sind.

6. Eckverstärkungseinsatz nach einem der vorhergehenden Ansprüche,
**dadurch gekennzeichnet, dass** sich im Bereich des Eckflansches (18) eine Durchgangsöffnung (52) normal zur Eckflanschebene durch das Basisteil (14) und das Ummantelungsteil (16) erstreckt und dass auf den äußeren Oberflächen des Ummantelungsteils (16) um die Durchgangsöffnung (52) herum eine Dichtrippe (46) ausgebildet ist.

7. Eckverstärkungseinsatz nach einem der vorhergehenden Ansprüche,
**dadurch gekennzeichnet, dass** am Basisteil (14) zumindest ein federzungenartiges Element (36) ausgebildet ist, an dessen freiem Ende ein Rastnocken (38) angeordnet ist, der sich durch das Ummantelungsteil (16) erstreckt und aus ihm herausragt.

8. Eckverstärkungseinsatz nach Anspruch 7,
**dadurch gekennzeichnet, dass** das federzungenartige Element (36) und der Rastnocken (38) einstückig mit dem Basisteil (14) ausgeführt sind.

9. Eckverstärkungseinsatz nach einem der vorhergehenden Ansprüche,
**dadurch gekennzeichnet, dass** das Basisteil (14) aus Metall, Hartkunststoff oder einem Hartgummimaterial besteht.

10. Eckverstärkungseinsatz nach einem der vorhergehenden Ansprüche,
**dadurch gekennzeichnet, dass** das Basisteil (14) zusammen mit dem Ummantelungsteil (16) durch einen Zweikomponentenformspritzvorgang als Einheit erzeugt worden ist.

## Claims

1. Corner reinforcement insert (10), in particular for wall elements with a double-angled edge, comprising:
- a base part (14) which
-- has a plate-shaped corner flange (18) arranged at least substantially in one plane and having an angled inner circumferential edge (20) and an angled outer circumferential edge (22), and
-- a first web (24) as well as a second web (26) which extend from the same side of the base part (14), perpendicularly to the plane of said corner flange and parallel to said inner circumferential edge (20), wherein the first web (24) is located this side of a bending point (28) of the inner circumferential edge (20) and the second web (26) is located on the far side of said bending point (28),
**characterized by**
- a corner-shaped sheathing part (16) having a slot (40) which is designed to accommodate the corner flange (18) and in which said corner flange (18) is arranged in a manner substantially completely surrounded by the sheathing part (16), wherein
- the first web (24) and the second web (26) extend at the inner circumferential edge (20) of the corner flange (18) and form a stop belonging to the base part (14) for the sheathing part (16), and
- the sheathing part (16) consists of an elastomer material and the base part (14) consists of a material which is rigid relative to said sheathing part (16).

2. Corner reinforcement insert according to Claim 1,
**characterized in that** the first web (24) and the second web (26) are connected to one another at the bending point (28), and that a positioning projection (30) extends from said webs (24, 26) at the bending point (28), perpendicularly to the plane of the corner flange.

3. Corner reinforcement insert according to Claim 2,
**characterized in that** the positioning projection (30) is beveled in the region of its free end.

4. Corner reinforcement insert according to one of Claims 1 to 3,
**characterized in that** each web (24, 26) is provided with at least one through-bore (34) which extends perpendicularly to the plane of the corner flange and the position of which coincides with a predetermined modular dimension.

5. Corner reinforcement insert according to one of the preceding claims,
**characterized in that** one or more sealing ribs (44, 46, 48, 50) are formed on outer surfaces of the sheathing part (16).

6. Corner reinforcement insert according to one of the preceding claims,
**characterized in that** a through-aperture (52) extends, perpendicularly to the plane of the corner flange, through the base part (14) and the sheathing part (16) in the region of said corner flange (18), and that a sealing rib (46) is formed on the outer surfaces of the sheathing part (16), around said through-aperture (52).

7. Corner reinforcement insert according to one of the preceding claims,
**characterized in that** there is provided on the base part (14) at least one spring-tongue-type element (36), at the free end of which there is arranged a latching pin (38) which extends through the sheathing part (16) and protrudes from it.

8. Corner reinforcement insert according to Claim 7,
**characterized in that** the spring-tongue-type element (36) and the latching pin (38) are embodied in one piece with the base part (14).

9. Corner reinforcement insert according to one of the preceding claims,
**characterized in that** the base part (14) consists of metal, hard plastic or a hard rubber material.

10. Corner reinforcement insert according to one of the preceding claims,
**characterized in that** the base part (14) has been produced, together with the sheathing part (16), as a unit by means of a two-component injection moulding process.

## Revendications

1. Insert de renfort d'angle (10), en particulier pour éléments de paroi présentant un bord plié de manière à former deux angles, comportant
- un élément de base (14) qui présente
-- une bride angulaire (18) en forme de plaque, disposée au moins sensiblement dans un plan et pourvue d'un bord périphérique intérieur (20) en équerre et d'un bord périphérique extérieur (22) en équerre, et
-- une première traverse (24) et une seconde traverse (26) qui s'étendent perpendiculairement au plan de la bride angulaire et parallèlement au bord périphérique intérieur (20), du même côté de l'élément de base (14), la première traverse (24) et la seconde traverse (26) se trouvant respectivement de part et d'autre d'un coude (28) du bord périphérique intérieur (20),
**caractérisé par**
- une pièce d'enveloppe (16) de forme angulaire qui comporte une fente (40) conçue pour recevoir la bride angulaire (18) et dans laquelle fente la bride angulaire (18) est disposée sensiblement entièrement entourée par la pièce d'enveloppe (16),
- la première traverse (24) et la seconde traverse (26) s'étendant sur le bord périphérique intérieur (20) de la bride angulaire (18) et formant une butée de l'élément de base (14) pour la pièce d'enveloppe (16), et
- la pièce d'enveloppe (16) étant composée d'un matériau élastomère, et l'élément de base (14) d'un matériau rigide par rapport à la pièce d'enveloppe (16).

2. Insert de renfort d'angle selon la revendication 1,
**caractérisé en ce que** la première traverse (24) et la seconde traverse (26) sont reliées l'une à l'autre au coude (28) et qu'une saillie de positionnement (30) située au coude s'étend perpendiculairement au plan de la bride angulaire à partir des traverses (24, 26),

3. Insert de renfort d'angle selon la revendication 2,
**caractérisé en ce que** ladite saillie de positionnement (30) est en biseau dans la zone de son extrémité libre.

4. Insert de renfort d'angle selon l'une des revendications 1 à 3,
**caractérisé en ce que** chacune des traverses (24, 26) est pourvue d'au moins un alésage traversant (34) qui s'étend perpendiculairement au plan de la bride angulaire et dont la position correspond à une cote de trame prédéterminée.

5. Insert de renfort d'angle selon l'une des revendications précédentes,
**caractérisé en ce qu'**une ou plusieurs nervures de joint (44, 46, 48, 50) sont formées sur les surfaces extérieures de la pièce d'enveloppe (16).

6. Insert de renfort d'angle selon l'une des revendications précédentes,
**caractérisé en ce que** dans la zone de la bride angulaire (18) un alésage traversant (52) s'étend perpendiculairement au plan de la bride angulaire à travers l'élément de base (14) et la pièce d'enveloppe (16) et **en ce qu'**une nervure de joint (46) est formée tout autour de l'alésage traversant (52) sur les surfaces extérieures de la pièce d'enveloppe (16).

7. Insert de renfort d'angle selon l'une des revendications précédentes,
**caractérisé en ce qu'**au moins un élément se présentant sous la forme d'une languette flexible (36) et à l'extrémité libre duquel est disposé un ergot d'encliquetage (38) s'étendant à travers la pièce d'enveloppe (16) d'où il fait saillie, est formé sur l'élément de base (14).

8. Insert de renfort d'angle selon la revendication 7,
**caractérisé en ce que** ledit élément sous forme de languette flexible (36) et ledit ergot d'encliquetage (38) sont réalisés d'un seul tenant avec l'élément de base (14).

9. Insert de renfort d'angle selon l'une des revendications précédentes,
**caractérisé en ce que** l'élément de base (14) est en métal, en matière plastique dure ou en caoutchouc dur.

10. Insert de renfort d'angle selon l'une des revendications précédentes,
**caractérisé en ce que** l'élément de base (14) est fabriqué par moulage par injection à deux composants conjointement avec la pièce d'enveloppe (16) pour former une unité avec celle-ci.
